# EUROPÄISCHE PATENTSCHRIFT

(11) **EP 4 346 222 B1**
(45) Veröffentlichungstag und Bekanntmachung des Hinweises auf die Patenterteilung: **07.08.2024**
(21) Anmeldenummer: 22198118.6
(22) Anmeldetag: 27.09.2022
(51) Int. Cl.: H04N 23/60, H04N 7/18, H04N 25/47

(54) **KAMERA UND VERFAHREN ZUR ERKENNUNG VON BLITZEN**
CAMERA AND METHOD FOR DETECTING LIGHTNING
CAMÉRA ET PROCÉDÉ DE DÉTECTION DE FLASHS

(43) Veröffentlichungstag der Anmeldung: 03.04.2024
(73) Patentinhaber: SICK AG, 79183 Waldkirch (DE)
(72) Erfinder: Müller, Dr. Romain, 79252 Stegen (DE); Strohmeier, Dr. Dirk, 79312 Emmendingen (DE); Schwartzkopff, Tijl, 79108 Freiburg (DE)

(56) Entgegenhaltungen:
- EP-A1- 2 574 511
- WO-A1-2018/037079
- WO-A1-2022/181098
- CN-A- 114 140 656
- DE-A1- 102020 205 637
- PARK SEOKJUN ET AL: "Low-Power, Bio-Inspired Time-Stamp-Based 2-D Optic Flow Sensor for Artificial Compound Eyes of Micro Air Vehicles", IEEE SENSORS JOURNAL, IEEE, USA, vol. 19, no. 24, 15 December 2019 (2019-12-15), pages 12059 - 12068, XP011753690, ISSN: 1530-437X, [retrieved on 20191204], DOI: 10.1109/JSEN.2019.2938559

## Beschreibung

Die Erfindung betrifft eine Kamera und ein Verfahren zur Erkennung von Blitzen nach dem Oberbegriff von Anspruch 1 beziehungsweise 8.

Das Erkennen von kleinen oder größeren Blitzen ist eine Herausforderung. Dabei ist hier genaugenommen mit einem Blitz in erster Linie nicht das Wetterphänomen gemeint, sondem eine Funkenentladung, wie sie beispielsweise bei einem Kurzschluss auf einer Leiterplatte oder allgemein an einer überwachten Maschine auftritt. Der Anwendungsfall kann eine Qualitätsinspektion oder eine Kontrollüberwachung beziehungsweise rechtzeitige Warnung bei Brandgefahr sein.

Rein optisch bedeutet ein Blitz ein sehr kurzes, sehr hetles und in der Regel lokal begrenztes Aufleuchten zwischen zwei Leitern, mit einer zwar grob linienförmigen, in ihren Einzelheiten aber unvorhersagbaren und schnell variierenden Geometrie. Herkömmliche Kameratechnologie eignet sich nicht für den Nachweis von Blitzen. Wegen deren sehr kurzer Lebensdauer ist es wahrscheinlich, dass die Blitze zwischen zwei Aufnahmen oder Frames auftreten und so von Anfang an übersehen werden. Es ist kein Ausweg, mit entsprechend verlängerter Belichtungszeit zu arbeiten. Dadurch werden die Blitze womöglich eingefangen, aber die Bilder werden durch andere Störeffekte überbelichtet, so dass die Blitze weiterhin nicht erkennbar bleiben.

Die US 9 910 082 B2 befasst sich mit einer Vorrichtung zum Messen und Erfassen elektrischer Entladungen. Dabei werden Kalibrationsdaten zu Entladungen verschiedener Stärke vorgespeichert Damit werden Kameraaufnahmen von Entladungen bewertet Auf die Problematik, dass aufgrund einer begrenzten Framerate die Blitze in den Aufnahmen gar nicht erst zu sehen sind, geht das Dokument nicht ein.

Die DE 10 2013 106 514 B3 beschreibt eine Vorrichtung zum Absichern einer automatisiert arbeitenden Maschine, in der ein Kamerasystem Kamerabilder eines Schutzbereichs liefert, der auf Fremdobjekte hin ausgewertet wird. Zusätzlich findet eine Analyse der Kamerabilder statt, ob es sich bei einem Fremdobjekt um einen Schweißfunken handelt. Solche Schweißfunken sind allerdings kein Beispiel einer Funkenentladung beziehungsweise eines Blitzes, da es sich um kein rein elektrisches Phänomen handelt, sondern ein glühendes Teilchen, meist innerhalb eines ganzen Schwarms solcher Teilchen. Somit sind viel langsamere Zeitskalen relevant, mit denen herkömmliche Kameras gut zurechtkommen.

In jüngerer Zeit ist eine neuartige Kameratechnik entstanden, die sogenannte ereignis- oder eventbasierte Kamera. Sie wird in Anlehnung an den visuellen Cortex auch als neuromorphologische Kamera bezeichnet. Eine herkömmliche Kamera belichtet mit einer regelmäßigen Frame- oder Bildwiederholrate alle ihre Pixel und liest sie dann gleichzeitig aus, um so eine der Bildwiederholrate entsprechende Anzahl stationärer zweidimensionaler Bilder pro betrachtetem Zeitraum zu gewinnen. In einer ereignisbasierten Kamera gibt es ebenfalls eine Matrix von Pixeln, aber weder eine feste Bildwiederholrate noch ein gemeinsames Auslesen von Pixeln. Stattdessen prüft jedes Pixel für sich, ob es eine Änderung in der Intensität feststellt. Nur in diesem Fall wird eine Bildinformation erzeugt und ausgegeben beziehungsweise ausgelesen, und zwar nur von diesem Pixel. Jedes Pixel ist somit eine Art unabhängiger Bewegungsdetektor. Eine erfasste Bewegung wird individuell als Ereignis gemeldet. Dadurch reagiert die ereignisbasierte Kamera äußerst schnell auf die Dynamik in der Szene. Aus den Ereignissen erzeugte Bilder sind für das menschliche Auge nicht so intuitiv zu erfassen, weil die statischen Bildanteile fehlen.

Eine ereignisbasierte Kamera wird beispielsweise in einem Whitepaper der Firma Prophesee beschrieben, das auf deren Internetseite abgerufen werden kann. Aus der WO 2015/036592 A1, WO 2017/174579 A1 und WO 2018/073379 A1 sind jeweils Pixelschaltkreise für eine ereignisbasierte Kamera bekannt.

Die Arbeit von Gallego, Guillermo, Henri Rebecq, und Davide Scaramuzza, "A unifying contrast maximization framework for event cameras, with applications to motion, depth, and optical flow estimation", IEEE Int. Conf. Comput. Vis. Pattern Recog. (CVPR), Vol. 1. 2018 stellt Verfahren vor, wie sich aus den Daten einer ereignisbasierten Kamera Bewegung, Entfernungen und optischer Fluss bestimmen lassen.

Die US 2013/0335595 A1 offenbart eine Vorrichtung und ein Verfahren zur ereignisbasierten Bildverarbeitung, konkret zur Bestimmung des optischen Flusses, der aber wie schon erwähnt, ein recht komplexes und aufwändiges Werkzeug ist.

In der EP 3 663 963 A1 wird eine ereignisbasierte Kamera zum Codelesen verwendet

Auch wenn einige Literaturstellen genannt wurden, ist das nichts im Vergleich zu der Fülle an Dokumenten zu herkömmlichen Kameras Ereignisbasierte Kameras werden insgesamt noch wenig in der Praxis eingesetzt, und wenn doch, dann in erster Linie aufgrund ihrer intrinsischen Bewegungserkennung. Für die Blitzerkennung wurde die Anwendung einer ereignisbasierten Kamera noch nie in Erwägung gezogen, und Bewegung ist auch keine für die Erkennung von Blitzen geeignete Beschreibungsebene.

Die WO 2022/181098 A1 offenbart eine Informationsverarbeitungsvorrichtung, die mit Hilfe einer ereigrusbasierten Kamera einen Schleifstein beobachtet Durch Auswertung von Bildem, die aus den Ereignissen zusammengesetzt werden, kann ein Funkenflug erfasst werden.

In der CN 114140656 A1 wird ein Verfahren zur Identifizierung von Schiffszielen mit H**ilfe** von Ereigniskameras beschrieben. Dafür werden die Ereignisse in Bilder umgerechnet, um mit üblichen Mitteln eines Faltungsnetzes (CNN) auswerten zu können.

Die EP 2 574 511 A1 befasst sich mit der Analyse von Straßenoberflächen aus Ereignissen einer ereignisbasierten Kamera. Dazu werden die Ereignisse zu Aktivitätskarten integnert, um Bildverarbeitungsmethoden einsetzen zu können, konkret eine Founertransformation der Aktivitätskarte zu erzeugen, um aus den Spektren auf die Oberfläche zu schließen

Die WO 2018/037079 A1 beschreibt ein SLAM-Verfahren mit einer ereignisbasierten Kamera.

Aus der DE 10 2020 205 637 A1 ist eine Überwachungsvorrichtung zur Kontrolle **einer** stoffschlüssigen Fügeverbindung eines Werkstücks bekannt, die einen Dynamic-Vision-Sensor einsetzt, Damit werden einem Auswertemodul Ereignisdaten von lokalen Helligkeitsänderungen der Fügeverbindung bereitgestellt, das die Fügeverbindung basierend auf den Ereignisdaten überprüft, kontrolliert und/oder bewertet.

Seokjun Park, Kyuseok Lee, Hyunsoo Song, Jihyun Cho, Sung-Yun Park, Euisik Yoon, "Low-Power, Bio-Inspired Time-Stamp-Based 2-D Optic Flow Sensor for Artificial Compound Eyes of Micro Air Vehicles", IEEE Sensors Journal, vol.19, no.24, pp.12059-12068, 2019, offenbart die Datenbearbeitung nur in der Intensität ansteigender Bildpunkte, um den Datenverarbeitungsaufwand zu reduzieren.

Es ist daher Aufgabe der Erfindung, eine Kamera mit einer verbesserten Blitzerkennung anzugeben.

Diese Aufgabe wird durch eine Kamera und ein Verfahren zur Erkennung von Blitzen nach Anspruch 1 beziehungsweise 8 gelöst. Wie eingangs schon erwähnt, steht der Begriff Blitz stellvertretend für eine elektrische Ladung, Funkenentladung beziehungsweise einen kurzzeitigen Lichtbogen, der sich optisch in einem sehr plötzlich auftretenden und wieder verschwindenden Leuchten großer Helligkeit äußert Der Blitz ist meist lokal begrenzt mit nennenswerter Ausdehnung nur in einer Dimension auf dem Ausbreitungsweg von einem Leiter zu einem anderen Leiter. Blitze entstehen an zufällig erscheinenden Stellen, denn auch wenn objektiv ein Kurzschluss oder Überschlag an bestimmten Stellen am wahrscheinlichsten ist, sind diese Stellen üblicherweise nicht vorab bekannt Das Wetterphänomen, also der Gewitterblitz, ist erfindungsgemäß auch erfassbar, aber vorzugsweise werden Blitze durch Kurzschlüsse, statische Entladungen und dergleichen an Objekten wie Halbleitern, Bauteilen oder Maschinen erkannt.

Ein Bildsensor mit einer Vielzahl von Pixelelementen, vorzugsweise zu mindestens einer Zeile oder Matrix angeordnet, erzeugt Bildinformationen der Szenerie, die auf Blitze überwacht werden soll. Herkömmlich sind solche Bildinformationen Grauwert- oder Farbbider, erfindungsgemäß sind es andere Bildinformationen, die sogleich näher beschrieben werden Eine Steuer- und Auswertungseinheit ist mit dem Bildsensor verbunden, fiest die Bildinformationen aus und erkennt durch Datenverarbeitung, ob ein Blitz erfasst ist.

Die Erfindung geht von dem Grundgedanken aus, als Bildsensor einen ereignisbasierten Bildsensor zu verwenden. Die Kamera ist also eine ereignisbasierte Kamera anstelle einer herkömmlichen Kamera mit herkömmlichem Bildsensor. Die Unterschiede wurden einleitend kurz diskutiert: Die Pixel erkennen jeweils Veränderungen in der Intensität, statt einfach die jeweilige Intensität zu messen. Eine solche Veränderung, die vorzugsweise rasch genug sein und ein Rauschmaß übersteigen sollte, ist eines der namensgebenden Ereignisse. Zudem werden Signale nur bei einer solchen Veränderung in der Intensität bereitgestellt beziehungsweise ausgelesen werden, und zwar nur von dem betroffenen Pixel oder den betroffenen Pixeln. Der Name ereignisbasierter Bildsensor steht für das Erfassungsprinzip, unabhängig von anderen denkbaren Namen wie neuromorphologischer Bildsensor.

Die Steuer- und Auswertungseinheit liest anstelle herkömmlicher Bilder die Ereignisse aus. Die ursprünglich erfasste Bildinformation des Bildsensors sind somit die Ereignisse, und dementsprechend werden Blitze durch Auswertung der Ereignisse erkannt.

Die Erfindung hat den Vorteil, dass Blitze verlässlich erkannt werden. Damit wird ein neues Anwendungsfeld erschlossen, das mit Kameratechnologie bislang nicht oder jedenfalls nicht zufriedenstellend bedient werden konnte. Ein ereignisbasierter Bildsensor ist aufgrund seines besonderen Funktionsprinzips schnell genug, um die Blitze zu erfassen. Eine eigentliche Framerate gibt es nicht, und die Reaktionszeit der Pixelelemente liegt typischerweise unterhalb der Lebensdauer eines Blitzes, ganz im Gegensatz zu der üblichen Framerate einer herkömmlichen Kamera. Zugleich bleibt die Bildinformation auf Ereignisse beschränkt. Würden herkömmliche Bilder mit einer Framerate aufgenommen, die hoch genug ist, um Blitze zu erfassen, so stünden dem nicht nur die prohibitiven Kosten für die Kamera entgegen. Es fielen außerdem ungeheure Datenmengen an, die zumindest in Echtzeit kaum noch übertragbar und auswertbar wären und jedenfalls weitere Kosten für sehr leistungsfähige Rechenbausteine erforderten. Die auf einen Blitz bezogenen Ereignisse hingegen entsprechen Datenmengen, deren Auswertung sogar eher anspruchsloser ist als die Bildverarbeitung von herkömmlichen Bildern selbst bei moderater, für Blitze unzureichender Framerate. Wird eine ruhende Szenerie beobachtet, so sind nämlich die Blitze neben Rauschen die einzigen Auslöser für Ereignisse, der ruhende Hintergrund wird von dem ereignisbasierten Bildsensor vollständig ignoriert.

Die Steuer- und Auswertungseinheit ist bevorzugt dafür ausgebildet, einen Blitz als Mindestanzahl von Ereignissen innerhalb einer Maximalzeit zu erkennen, insbesondere einer Mindestanzahl von lokalen Ereignissen. Blitze erscheinen nur auf ganz kurzen Zeitskalen, und deshalb werden nur Ereignisse innerhalb einer sehr kurzen Maximalzeit als zum selben Blitz zugehörig betrachtet. Die Maximalzeit beträgt dafür insbesondere höchstens 10 ms, höchstens einige Millisekunden, höchstens 1 ms, höchstens einige hundert Mikrosekunden, höchstens 100 µs oder noch weniger. Ferner ist ein Blitz typischerweise lokal, somit auf einen kleinen Bildbereich beschränkt, der höchstens 50 %, 25 %, 10 % oder 5 % der Pixelelemente und damit des Sichtbereichs (FOV, Field of View) der Kamera ausmacht. Eine Mindestanzahl von Ereignissen sollte beobachtet werden, um einen Blitz von Rauschen zu unterscheiden.

Die Steuer- und Auswertungseinheit ist bevorzugt dafür ausgebildet, die Ereignisse selbst auszuwerten, ohne daraus ein Bild zusammenzusetzen. Die Auswertung bleibt somit vollständig auf der Ebene von Ereignissen. Es gibt zu keinem Zeitpunkt etwas, das einem herkömmlichen Bild entspricht, also einer Art Matrix, die direkt auf einem Anzeigegerät als Ansicht der überwachten Szenerie wahrgenommen würde. Als ein definierender Unterschied kann gesagt werden, dass in einem Bild die Ordnung durch die Position der Pixelelemente vorgegeben ist. Die Ereignisse hingegen sind davon unabhängig beispielsweise in einer Liste repräsentiert, wobei es keinen unmittelbaren Zusammenhang zwischen dem Ort der Speicherung des Ereignisses und der Position des Pixelelements gibt, in dem das Ereignis erzeugt wurde. Indem ein Bild gar nicht erst erzeugt wird, sind nur ganz erheblich kleinere Datenmengen zu übertragen und auszuwerten. Die allermeisten Pixelelemente erzeugen zu fast allen Zeiten kein Ereignis. Das gilt sogar zu den ohnehin schon seltenen Zeitpunkten, in denen tatsächlich ein Blitz aufgetreten ist. Herkömmlich würden dadurch leere Bildbereiche entstehen, die auch übertragen und ausgewertet werden müssen. Nach dieser bevorzugten Ausführungsform werden derartige leere Bildbereiche gar nicht erst repräsentiert und müssen daher auch nicht verarbeitet werden.

Auch wenn die Blitzerkennung somit keiner Bilder bedarf, bleibt denkbar, ein Bild zusammenzusetzen, dann aber für eine zusätzliche, andere Auswertung oder beispielsweise eine Visualisierung des Blitzes. Im Übrigen bliebe selbst ein doch für die Blitzerkennung aus Ereignissen zusammengesetztes Bild spärlich besetzt, der Datenfluss zwischen Bildsensor und Steuer- und Auswertungseinheit bliebe sehr gering, und eine geschickte Auswertung könnte die spärliche Besetzung ausnutzen. Eine konventionelle Hochgeschwindigkeitskamera, selbst wenn sie die erforderliche Framerate erreichte, hätte keine Möglichkeit, die Datenmengen für die leeren Bildbereiche rechtzeitig zu erkennen und auszuschließen, und sie wäre daher entweder von vorneherein zu langsam oder bei ausreichender Framerate wegen der Datenflut nicht mehr echtzeitfähig.

Der Bildsensor erzeugt Bildinformationen bevorzugt mit einer Aktualisierungsfrequenz von mindestens einem KHz oder sogar mindestens zehn KHz. Die Aktualisierungsfrequenz einer herkömmlichen Kamera ist die Bildwiederholfrequenz oder Framerate. Eine solche gemeinsame Bildwiederholfrequenz kennt eine ereignisbasierte Kamera nicht, da die Pixelelemente ihre Bildinformationen einzeln und ereignisbasiert ausgeben oder auffrischen. Dabei gibt es aber extrem kurze Ansprechzeiten, die mit einer herkömmlichen Kamera nur zu immensen Kosten mit tausend oder mehr Bildern pro Sekunde erreichbar wären, bei einer ereignisbasierten immer noch möglichen noch höheren Aktualisierungsfrequenz wäre das mit herkömmlichen Kameras technisch nicht mehr darstellbar. Die Aktualisierungsfrequenz korrespondiert mit der oben eingeführten Maximalzeit, ist aber nicht unbedingt damit gleichzusetzen. Die Ereignisse werden vorzugsweise jeweils zyklisch nach einer Zeit dt ausgelesen. Die Zeitauflösung der Ereignisse könnte aber beispielsweise durch einen Zeitstempel noch feiner sein. Umgekehrt muss nicht auf jeden Auslesezyklus ein Auswertungszyklus folgen, insbesondere können Auswertungszyklen jeweils erst nach einer Zeit k*dt mit einer kleinen natürlichen Zahl k erfolgen. Für die Blitzerkennung entscheidend ist letztlich nur die Zeitauflösung der Pixelelemente, d.h. dort müssen Ereignisse erfasst werden, die so kurz sind, wie die Lebensdauer eines Blitzes. Dabei kommt es nicht einmal darauf an, dass der Blitz mit zeitlicher Präzision entsprechend dessen Lebensdauer erfasst ist, sondern vielmehr darauf, dass der Blitz mit seiner kurzen Lebensdauer Ereignisse auslöst, gegebenenfalls sogar mit Verzögerung, was dann lediglich dazu führt, dass dem Blitz ein etwas zu später Zeitpunkt zugeordnet wird, während das meist wesentliche Ergebnis, dass es einen Blitz gab, von einer Verzögerung unbeeinträchtigt bleibt. Insbesondere ist die Zeit dt oder, falls das Pixelelement noch feinere Zeitstempel vergibt, sogar ein Bruchteil davon ausreichend, um den Blitz zu erfassen. Da ein Blitz nur selten auftritt, sind die meisten Auslese- und Auswertungszyklen sehr einfach, denn sie befassen sich mit leeren Ereignislisten oder nur wenigen Rauschereignissen.

Ein jeweiliges Pixelelement stellt bevorzugt fest, wenn sich die von dem Pixelelement erfasste Intensität ändert, und erzeugt genau dann ein Ereignis. Das drückt nochmals in anderen Worten das besondere Verhalten der Pixelelemente einer ereignisbasierten Kamera beziehungsweise eines ereignisbasierten Bildsensors aus, das bereits mehrfach angesprochen wurde. Das Pixelelement prüft, ob sich die erfasste Intensität verändert. Nur das ist ein Ereignis, und nur bei einem Ereignis wird eine Bildinformation ausgegeben oder ausgelesen. Es ist eine Art Hysterese denkbar, bei der das Pixelelement eine definierte, zu geringfügige Änderung der Intensität noch ignoriert und nicht als Ereignis auffasst.

Das Pixelelement liefert vorzugsweise als Bildinformation eine differentielle Information, ob sich die Intensität verringert oder erhöht hat. Eine aus dem Pixelelement gelesene Bildinformation ist also beispielsweise eine Polarität, ein Vorzeichen +1 oder -1 je nach Änderungsrichtung der Intensität. Dabei kann eine Schwelle für Intensitätsänderungen gesetzt sein, bis zu denen das Pixelelement noch kein Ereignis auslöst. Auch die Dauer einer Intensitätsänderung kann eine Rolle spielen, indem beispielsweise der Vergleichswert für die Schwelle mit einer gewissen Abklingzeit nachgezogen wird. Eine zu langsame Veränderung löst dann kein Ereignis aus, auch wenn in Summe, über ein gegenüber der Abklingzeit längeres Zeitfenster, die Intensitätsänderung über der Schwelle lag.

Als Alternative zu einem differenziellen ereignisbasierten Bildsensor ist prinzipiell auch eine integrierende Variante vorstellbar. Dann liefert das Pixelelement als Bildinformation eine integrierte Intensität in einem durch eine Änderung der Intensität bestimmten Zeitfenster. Hier beschränkt sich die Information nicht auf eine Richtung der Intensitätsänderung, sondern es wird in einem durch das Ereignis festgelegten Zeitfenster das einfallende Licht integriert und dadurch ein Grauwert bestimmt. Der Messwert entspricht damit demjenigen einer herkömmlichen Kamera, aber der Zeitpunkt der Erfassung bleibt ereignisbasiert und an eine Intensitätsänderung gekoppelt. Für eine Blitzerkennung ist die differentielle Variante geeigneter, da es auf das Ausmaß der Intensitätsänderung wenig ankommt beziehungsweise dieses Ausmaß in der Schwelle für die Auslösung eines Ereignisses ausgedrückt werden kann.

Ein Ereignis weist bevorzugt jeweils Koordinateninformationen des zugehörigen Pixelelements, eine Zeitinformation und/oder eine Intensitätsinformation auf. Ein herkömmlicher Datenstrom eines Bildsensors besteht aus den Intensitäts- oder Grauwerten der Pixel, und der Ortsbezug in der Bildsensorebene entsteht dadurch, dass sämtliche Pixel in geordneter Abfolge ausgelesen werden. Bei dem ereignisbasierten Bildsensor werden stattdessen vorzugsweise Datentupel je Ereignis ausgegeben, die das Ereignis zuordenbar machen Dabei werden vorzugsweise der Ort des zugehörigen Pixelelements, wie etwa dessen X-Y-Position auf dem Bildsensor, die Polarität oder Richtung ± 1 der Intensitatsänderung beziehungsweise die zum Ereignis gemessene Intensität und/oder ein Zeitstempel festgehalten Dadurch müssen trotz der hohen effektiven Bild. wiederholrate nur sehr wenige Daten ausgelesen werden, dies ganz besonders dann, wenn die überwachte Szenerie unverändert bleibt

Die Pixelelemente sind vorzugsweise derart ausgebildet oder konfiguriert, dass ein Ereignis nur bei hohem Kontrastunterschied entsprechend einem Blitz erzeugt wird Die Schwelle für das Auslösen eines Ereignisses in den Pixelelementen ist dabei auf unempfindlich gestellt Ein leichtes Rauschen oder ein normaler Kontrastwechsel durch kleine Bewegungen und dergleichen in der Szenerie löst dann keine Ereignisse aus. Zudem ist denkbar, dass der Kontrastunterschied innerhalb eines kleinen Zeitfensters entsprechend der mehrfach genannten Maximalzeit auftreten muss, langsame Intensitatsänderungen also nicht beachtet werden. Das ist beispielsweise dadurch möglich, dass der Schwellenvergleich nur um die Maximalzeit zurückreicht Erst der plötzliche enorme Unterschied zwischen Hintergrund und dem heften Leuchten des Blitzes genügt für ein Ereignis Die Pixelelemente wirken damit schon selbst in gewissem Rahmen als Blitzdetektor.

Die Steuer- und Auswertungseinheit ist dafür ausgebildet, nur Ereignisse sich erhöhender Intensität weiter auszuwerlen. Die Auswertung verwendet damit einen optionalen Fiter, nach dem nur Ereignisse entsprechend dem entstehenden und nicht mehr dem abklingenden Blitz weiter berücksichtigt werden. Das lässt sich als Polaritätsfilter bezeichnen, der nur Ereignisse mit der Polaritat +1 bei sich erhöhender Intensität durchlasst und Ereignisse mit der Polarität -1 bei sich verringernder Intensität eliminiert

Die Steuer- und Auswertungseinheit ist bevorzugt dafür ausgebildet örtlich isolierte Ereignisse zu verwerfen, wobei ein Ereignis örtlich isoliert ist, wenn während einer Maximalzeit in einer Nachbarschaft des Ereignisses zu wenige weitere Ereignisse auftreten, insbesondere gar kein weiteres Ereignis Dieser weitere optionale vorbereitende Auswertungsschritt kann als Einzelereignisfilter gegen Binärrauschen verstanden werden, mit dem örtlich isolierte Ereignisse eliminiert werden, die auf Rauschen und nicht einen Blitz zurückzufuhren sind. Isoliert in einem weiteren Sinne bedeutet dass es in der Nachbarschaft allenfalls ganz wenige weitere Ereignisse gibt, weniger als bei Auftreten eines Blitzes, und vorzugsweise wird isoliert in einem engeren Sinn verstanden, bei dem in der Nachbarschaft überhaupt keine weiteren Ereignisse auftreten. Es geht dabei um gleichzeitige Ereignisse, wobei gleichzeitig eine Toleranz aufweist, die vorzugsweise über die erwartete Dauer eines Blitzes definiert ist, die wiederum der schon mehrfach angesprochenen Maximalzeit entspricht. Die Nachbarschaft entspricht einem kleinen Bildbereich in der Umgebung des jeweils betrachteten Ereignisses, beispielsweise eine 4er-Nachbarschaft der direkten Nachbarpixel, einer 8er-Nachbarschaft, die auch diagonale Nachbarn einbezieht, oder etwas allgemeiner den Pixeln in einem Abstand 1..n gemessen in der 1-Norm oder 2... m gemessen in der 2-Norm, für kleine natürliche n, m. Es sei nochmals betont, dass hier vorzugsweise keine Filterkerne auf einem Bild operieren, denn ein Bild wurde vorzugsweise gar nicht erzeugt. Vielmehr wird bevorzugt in einer Liste oder sonstigen, von einem Bild verschiedenen Repräsentation der Ereignisse nach solchen Ereignissen gesucht, deren Position die genannte Nachbarschaftsbeziehung erfüllt.

Die Steuer- und Auswertungseinheit ist bevorzugt dafür ausgebildet, eine Anzahl während einer Maximalzeit auftretender Ereignisse mit einem Schwellenwert zu vergleichen und bei Überschreiten des Schwellenwerts einen Blitz zu erkennen. Die Maximalzeit korrespondiert, wie nun vielfach erwähnt, mit der erwarteten Lebensdauer eines Blitzes, und sie kann einem oder mehreren Auslesezyklen entsprechen. Treten in diesem Zeitfenster ausreichend viele Ereignisse auf, so wird das als Auftreten eines Blitzes bewertet. Weniger Ereignisse als der Schwellenwert werden somit noch als Rauschen angesehen. Diese Bewertung ist ausgesprochen einfach und leicht in Echtzeit durchzuführen. Werden die Ereignisse als Liste repräsentiert, so kann die Anzahl unmittelbar aus der Länge der Liste abgeleitet werden. Vorzugsweise werden zuvor noch Ereignisse herausgefiltert, die nicht einem Blitz zuzurechnen sind, insbesondere mit negativer Polarität oder Einzelereignisse wie oben beschrieben. Es ist denkbar, die Anzahl während einer Maximalzeit auftretender Ereignisse auszugeben, als Maß dafür, wie stark der Blitz war beziehungsweise, wie nahe ein nicht als Blitz bewerteter Vorgang dem Schwellenwert gekommen ist. Das ist insbesondere für eine Diagnose und Konfiguration der Blitzerkennung von Wert.

Die Steuer- und Auswertungseinheit ist bevorzugt dafür ausgebildet, einem möglichen erkannten Blitz nur Ereignisse innerhalb eines Teilbereichs eines Erfassungsbereichs der Kamera zuzuordnen. Dies ist ein Ortskriterium auf Basis der Annahme, dass ein Blitz lokal bleibt, die durch einen Blitz ausgelösten Ereignisse somit ein Cluster bilden. Damit kann die Unterscheidung zwischen Rauschen oder sonstigen unbeachtlichen Auslösern und einem Blitz weiter aufgeschärft werden. Die Bedingung ist stärker als die oben schon diskutierte Bedingung, dass einem Blitz zugeordnete Ereignisse nur einen Teil der Pixelelemente betreffen, da nun auch eine geometrische Bedingung gefordert ist. Es sind zahlreiche Verfahren an sich bekannt, mit denen geprüft werden kann, ob Positionen in einem Sichtfeld sinnvoll zu einem einzigen Cluster zusammengefasst werden können oder nicht.

Die Steuer- und Auswertungseinheit ist bevorzugt dafür ausgebildet, aus den Ereignissen, in denen ein Blitz erkannt wird, einen Ort des Blitzes zu bestimmen, insbesondere als Mittelwert, Umhüllende oder Punktwolke der den Ereignissen entsprechenden Positionen der Pixelelemente. Wenn ein Blitz einmal erkannt ist, kann zusätzlich noch dessen Ort bestimmt werden. Dazu werden die Positionsinformationen der beitragenden Ereignisse, die den Positionen beispielsweise als X- und Y-Koordinaten der diese Ereignisse auslösenden Pixelelemente entsprechen, geeignet zusammengefasst. Eine Möglichkeit dafür ist, einen Mittelwert oder Schwerpunkt zu bilden. Ebenso kann eine Umhüllende gefunden werden, oder insbesondere im Falle einer Visualisierung können die Positionen der beitragenden Ereignisse als Punktwolke bestimmt werden. Bei all diesen Kombinationen werden bevorzugt vorab Ausreißer mit an sich bekannten statistischen Verfahren eliminiert.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer Kamera und einer davon überwachten Szenerie, in der Blitze erkannt werden sollen;
- Fig. 2: eine beispielhafte Intensitätsverteilung eines Pixels zur Erläuterung von ereignisbasierter Erfassung von Bildinformation;
- Fig. 3: ein beispielhaftes Bild eines Blitzes, von einem ereignisbasierten Bildsensor aufgenommen;
- Fig. 4: eine beispielhafte Darstellung der Anzahl Ereignisse in Abhängigkeit von der Zeit über eine Phase mit einem Blitz;
- Fig. 5: eine Darstellung gemäß Figur 4 nach Eliminieren der Ereignisse mit negativer Polarität, also abnehmender Intensität des wieder verschwindenden Blitzes; und
- Fig. 6: eine Darstellung der X- und Y-Position eines erkannten Blitzes in Abhängigkeit von der Zeit.

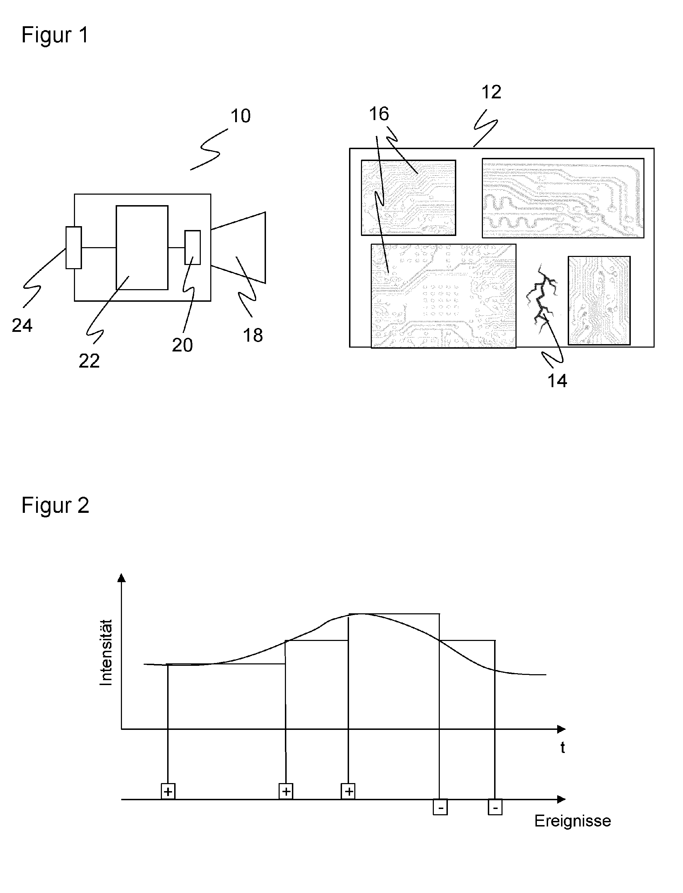

Figur 1 zeigt eine schematische Darstellung einer Kamera 10 und einer davon überwachten Szenerie 12, in der Blitze 14 erkannt werden sollen. Solche Blitze 14 entstehen insbesondere als Kurzschluss oder Funkenüberschlag innerhalb von oder zwischen elektronischen Bauteilen 16. Die Szenerie 12 ist rein beispielhaft zu verstehen, für die Erfindung bedeutend ist lediglich, dass darin Blitze 14 auftreten können.

Die Kamera 10 erfasst die Szenerie 12 über ein rein symbolisch dargestelltes Objektiv 18 mit einem Bildsensor 20. Die Erfassung mit dem Bildsensor 20 ist auf kein bestimmtes Objektiv 18 und keinen bestimmten Kameraaufbau festgelegt. Der Bildsensor 20 ist ein ereignisbasierter Bildsensor, wie einleitend eingeführt und später unter Bezugnahme auf die Figur 2 weiter erläutert. Der Bildsensor 20 umfasst in der Regel eine Matrix- oder Zeilenanordnung von Pixeln.

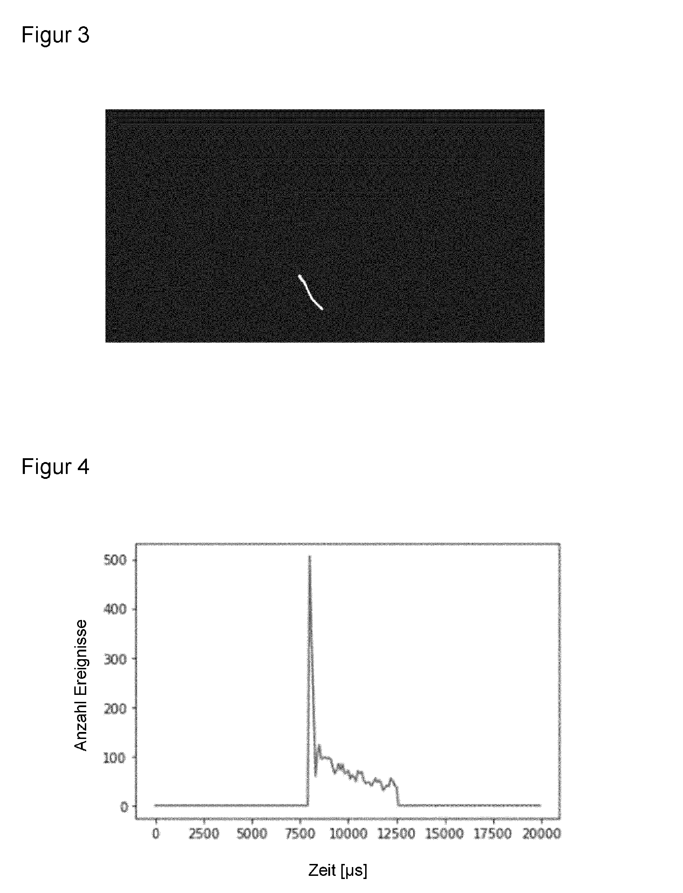

Eine Steuer- und Auswertungseinheit 22 mit dem Bildsensor 20 verbunden, die dessen Bildinformationen ausliest und weiterverarbeitet. Die Steuer- und Auswertungseinheit 24 weist mindestens einen digitalen Rechenbaustein auf, wie mindestens einen Mikroprozessor, mindestens ein FPGA (Field Programmable Gate Array), mindestens einen DSP (Digital Signal Processor), mindestens ein ASIC (Application-Specific Integrated Circuit), mindestens eine VPU (Video Processing Unit) oder mindestens einen Neural Processor. Die Steuer- und Auswertungseinheit 22 kann überdies anders als dargestellt zumindest teilweise extern der Kamera 10 vorgesehen sein, etwa in einer übergeordneten Steuerung, einem angeschlossenen Netzwerk, einem Edge-Device oder einer Cloud. Das in der Steuer- und Auswertungseinheit 22 implementierte Verfahren zur Blitzerkennung aus den Bildinformationen des Bildsensors 20 wird später unter Bezugnahme auf die Figuren 3 bis 6 näher erläutert.

Über eine Schnittstelle 24 gibt die Kamera 10 Informationen aus. Im Falle einer zumindest teilweise extern implementierten Blitzerkennung können dies Ereignisse des Bildsensors 20 und allgemein Ergebnisse oder Teilergebnisse der Blitzerkennung sein.

Umgekehrt kann vorgesehen sein, die Kamera 10 über die Schnittstelle 24 oder eine weitere Schnittstelle anzusprechen und beispielsweise zu konfigurieren.

Figur 2 zeigt zur Erläuterung des Funktionsprinzips des ereignisbasierten Bildsensors 20 im oberen Teil einen rein beispielhaften zeitlichen Intensitätsverlauf in einem Pixelelement des Bildsensors 20. Ein herkömmlicher Bildsensor würde diesen Intensitätsverlauf über ein vorgegebenes Belichtungszeitfenster integrieren, die integrierten Werte aller Pixelelemente würden im Takt einer vorgegebenen Framerate ausgegeben und dann für das nächste Bild zurückgesetzt.

Das Pixelelement des ereignisbasierten Bildsensors 20 reagiert stattdessen individuell und unabhängig von einer Framerate auf eine Intensitätsänderung. Mit senkrechten Strichen sind jeweils Zeitpunkte markiert, zu denen eine Intensitätsänderung festgestellt wurde. Im unteren Teil der Figur 2 sind zu diesen Zeitpunkten Ereignisse mit Plus und Minus je nach Richtung der Intensitätsänderung dargestellt. Es ist denkbar, dass das Pixelelement nicht auf jegliche Intensitätsänderung reagiert, sondern erst, wenn eine gewisse Schwelle überschritten wird. Weitergehend kann verlangt sein, dass die Schwelle innerhalb eines bestimmten Zeitfensters überschritten wird. Vergleichswerte früherer Intensitäten jenseits des Zeitfensters werden dann gleichsam vergessen. Durch Schwelle und/oder Zeitfenster lässt sich ein Pixelelement vorteilhafterweise schon individuell zumindest grob auf die Erkennung von Blitzen konfigurieren.

Die von einem Pixelelement erzeugten Ereignisse werden individuell zum Zeitpunkt des Ereignisses oder vorzugsweise in Auslesezyklen der Dauer dt ausgelesen und damit an die Steuer- und Auswertungseinheit 22 übertragen. Dabei ist die Zeitauflösung keineswegs auf dt begrenzt, da das Pixelelement das jeweilige Ereignis mit einem beliebig feinen Zeitstempel versehen kann. Die durch dt festgelegten Zyklen sind auch ansonsten nicht mit einer herkömmlichen Framerate zu vergleichen. Herkömmlich bedeutet eine höhere Framerate eine direkt linear heraufskalierte Datenmenge durch die zusätzlichen Bilder. Bei dem ereignisbasierten Bildsensor 20 hängt die zu übertragende Datenmenge von dt bis auf einen gewissen Verwaltungsoverhead nicht ab. Wird nämlich dt kürzer gewählt, so sind je Auslesezyklus auch weniger Ereignisse zu verarbeiten. Die Datenmenge bestimmt sich durch die Anzahl der Ereignisse und ist damit weitgehend unabhängig von dt.

Neben differenziellen ereignisbasierten Kameras gibt es auch integrierende ereignisbasierte Kameras. Sie reagiert ganz analog auf Intensitätsänderungen. Anstelle einer Ausgabe der Richtung der Intensitätsänderung wird aber in einem durch das Ereignis vorgegebenen Zeitfenster das einfallende Licht integriert. Dadurch entsteht ein Grauwert. Differenzielle und integrierende ereignisbasierte Kameras haben einen unterschiedlichen Hardwareaufbau, und die differenzielle ereignisbasierte Kamera ist schneller, da sie kein Integrationszeitfenster benötigt. Zur Technologie einer ereignisbasierten Kamera wird erneut ergänzend auf die einleitend genannte Patentliteratur und wissenschaftliche Literatur verwiesen.

Die Bildinformation des ereignisbasierten Bildsensors 20 ist kein Bild, sondern eine Ereignisliste. Ein jeweiliges Ereignis wird beispielsweise als Tupel mit dem Vorzeichen der Intensitätsänderung bei einer differentiellen ereignisbasierten Kamera beziehungsweise einem Grauwert bei einer integrierenden ereignisbasierten Kamera, der Pixelposition auf dem Bildsensor 20 in X- und Y-Richtung und einem Zeitstempel ausgegeben. Sofern nur binär entschieden werden soll, ob in einem jeweiligen Auslesezyklus dt ein Blitz 14 aufgetreten ist oder nicht, kann auf die Ausgabe oder Verarbeitung der Pixelposition verzichtet werden. Ein Zeitstempel ist nicht erforderlich, wenn der Auslesezyklus dt klein genug im Vergleich zu der Lebensdauer eines Blitzes ist. Die Polarität oder Intensität des Ereignisses ermöglicht eine genauere Auswertung, wie noch erläutert, aber Blitze können bereits allein aus der Anzahl Ereignisse erkannt werden. Somit ist kein Datum des beispielhaften Tupels zwingend erforderlich, und die Repräsentation eines Ereignisses kann je nach Ausführungsform gewählt werden, bis hin zur bloßen binären Erfassung, dass ein Ereignis aufgetreten ist, beziehungsweise dem Zählen von Ereignissen während eines Auslesezyklus' dt.

Ein Pixelelement, das in einem Auslesezyklus kein Ereignis registriert, trägt zu der Ereignisliste nicht bei und muss nicht ausgelesen werden. Prinzipiell wäre es denkbar, aus der Ereignisliste ein Bild zu rekonstruieren, indem die Ereignisse in eine Matrix mit X-Y-Positionen entsprechend den Positionen der Pixelelemente auf dem Bildsensor 20 eingetragen werden. Erfindungsgemäß wird auf diesen Zwischenschritt jedoch vorzugsweise verzichtet, die Auswertung bleibt dann unabhängig von Bildern beziehungsweise vollständig auf der Ebene von Ereignissen. Das reduziert die zu verarbeitenden Daten ganz erheblich, weil durch Blitze erzeugte Ereignisse sehr selten sind und somit die meisten Pixelelemente zu den meisten Zeiten keine zu verarbeitende Bildinformation erzeugen.

Figur 3 zeigt ein beispielhaftes Bild eines Blitzes, das aus den Ereignissen des ereignisbasierten Bildsensors 20 aufgenommen wurde. Dieses Bild dient allein der Veranschaulichung und dem Verständnis, denn wie mehrfach erwähnt, erfolgt die Blitzerkennung vorzugsweise gerade nicht auf Basis eines Bildes, sondern wertet direkt die Ereignisse aus. Ein Bild wie in Figur 3 könnte also aus den Ereignissen erzeugt werden, aber vorzugsweise geschieht dies nicht oder höchstens ergänzend beispielsweise für Diagnosezwecke oder Auswertungen zusätzlich zur Blitzerkennung.

Tatsächlich wird also für die Blitzerkennung vorzugsweise nicht das in Figur 3 gezeigte Bild aufgebaut und ausgewertet. Vielmehr erzeugt der ereignisbasierte Bildsensor 20 einen kontinuierlichen Datenstrom der individuell in den Pixelelementen ausgelösten Ereignisse. Der kontinuierliche Datenstrom kann ebenso kontinuierlich an die Steuer- und Auswertungseinheit 22 übertragen werden. Vorzugsweise werden stattdessen Datenpakete zyklisch in Auslesezyklen der Dauer dt übertragen. Die Dauer dt eines Auslesezyklus' ist prinzipiell frei wählbar, sollte aber an die kurze Lebensdauer eines Blitzes angepasst sein und daher klein bleiben, beispielsweise höchstens 1 ms oder höchstens 100 µs betragen. Sofern die Ereignisse einen Zeitstempel tragen, können langsamere Auslesezyklen gewählt werden, denn die zeitliche Zuordnung kann dann anhand der Zeitstempel immer noch den Zeitskalen eines Blitzes gerecht werden. Vorzugsweise folgt auf jeden Auslesezyklus ein Auswertezyklus der Steuer- und Auswertungseinheit 22. Prinzipiell könnten die Auswertezyklen auch langsamer sein, beispielsweise mit Periodendauer k*dt, wobei k eine kleine natürliche Zahl ist.

Figur 4 zeigt eine beispielhafte Darstellung der Anzahl Ereignisse in Abhängigkeit von der Zeit über eine Phase mit einem Blitz. Ereignisse sind jeweils über einen Auslesezyklus von 100 µs gezählt. Deutlich ist die scharfe ansteigende Flanke bei Auftreten des Blitzes zu erkennen. Das Abklingen erstreckt sich dann über eine etwas längere, in absoluten Zahlen immer noch sehr kurze Dauer.

Es ist vorteilhaft, die Ereignisliste vorab der eigentlichen Blitzerkennung noch zu bereinigen. Ein optionaler Vorverarbeitungsschritt reduziert das Rauschen, das Ausfiltern von spontanen Ereignissen, die mit einem Blitz nichts zu tun haben. In den Figuren 3 und 4 ist zu erkennen, dass dort entsprechendes Binärrauschen so gut wie nicht auftritt. Beispielsweise unter anderer Fremdlichtbelastung ist jedoch ein stärkeres Binärrauschen möglich.

Im Gegensatz zu einem Blitz tritt Binärrauschen zeitlich und örtlich isoliert auf. Ein beispielhaftes Filter kann also für ein jeweiliges Ereignis prüfen, ob es gleichzeitige Ereignisse in der Nachbarschaft gibt. Gleichzeitig definiert sich beispielsweise über ein Zeitfenster der Dauer dt oder einem Vielfachen davon. Die Nachbarschaft bezieht sich auf die Position des jeweiligen das Ereignis auslösenden Pixelelements, wobei ein Höchstabstand von einem oder wenigen Pixeln gefordert ist, d.h. beispielsweise eine 4er-Nachbarschaft der direkten Nachbarn oder ein 3x3-Fenster. Für spontane, isolierte Ereignisse unabhängig von einem Blitz werden sich gleichzeitige Ereignisse in der Nachbarschaft nicht finden, oder jedenfalls nicht mehr als eine Höchstanzahl sehr weniger solcher Ereignisse. Dadurch können isolierte Einzelereignisse erkannt und verworfen werden. Für die Prüfung, ob es weitere Ereignisse in der Nachbarschaft gibt, ist es nicht erforderlich, die Ereignisliste in ein Bild umzuwandeln. Stattdessen kann in der Liste nach weiteren Ereignissen mit gleichen Pixelkoordinaten innerhalb der durch die Nachbarschaft vorgegebenen Toleranz gesucht werden.

Ein weiterer optionaler Vorverarbeitungsschritt unterscheidet, ob es bei dem jeweiligen Ereignis heller oder dunkler geworden ist. Das kann anhand des Vorzeichens ±1 des Ereignisses beziehungsweise dessen Polarität entschieden werden, weshalb der Vorverarbeitungsschritt auch als Polaritätsfilter bezeichnet wird. Einzelereignisfilter und Polaritätsfilter können je nach Ausführungsform einzeln, gemeinsam oder gar nicht eingesetzt werden.

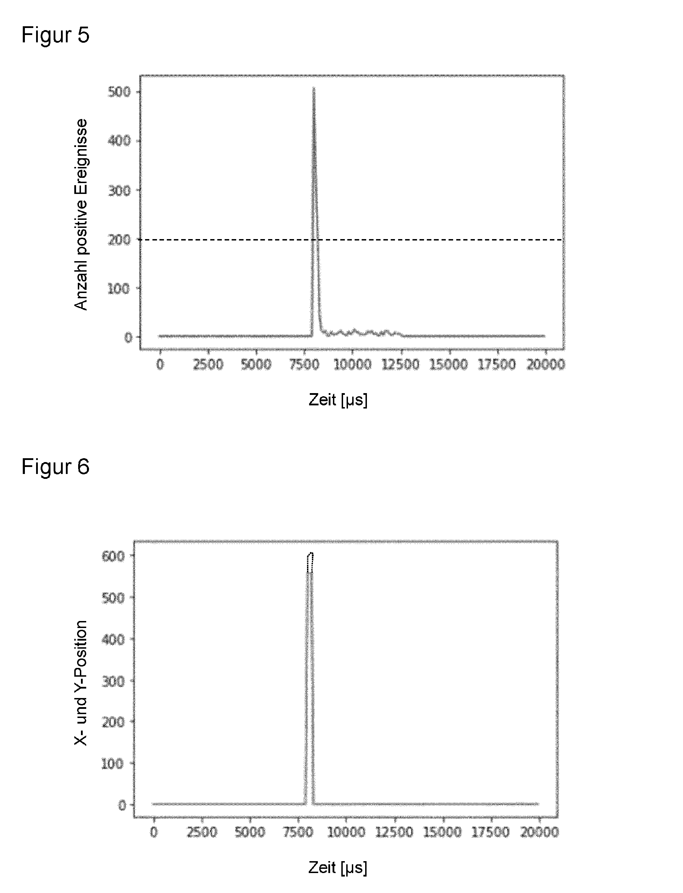

Figur 5 zeigt die Darstellung der Anzahl positiver Ereignisse in Abhängigkeit von der Zeit über eine Phase mit einem Blitz gemäß Figur 4 nach Anwenden eines Polaritätsfilters. Es sind nur Ereignisse mit Vorzeichen +1 verblieben, in denen es also heller geworden ist, der Blitz erschienen ist. Die Ereignisse mit Vorzeichen -1, in denen es dunkler geworden ist, der Blitz somit abklingt, hat das Polaritätsfilter eliminiert. Der ereignisbasierte Bildsensor 20 reagiert sehr schnell auf das Auftreten des Blitzes, jedoch etwas verzögert auf sein Verschwinden. Die nach dem Polaritätsfilter verbleibenden Ereignisse sind daher stärker in der Zeit lokalisiert und noch trennschärfer und einfacher auswertbar. Das ist mit bloßem Auge gut nachvollziehbar, der Peak in Figur 5 ist noch eindeutiger und schärfer als der Peak in Figur 4.

Der dem Blitz entsprechende Peak kann nun beispielsweise durch eine als gestrichelte Linie dargestellte Schwelle für eine Mindestanzahl von Ereignissen erkannt werden. Die Schwelle ist hier beispielhaft auf 200 Ereignisse gesetzt. Wichtig ist im Grunde nur, dass die Schwelle hoch genug ist, dass sie nicht durch doch verbleibende Rauschereignisse überschritten ist, und nicht mehr Ereignisse fordert, als ein Blitz auslöst. Wie in Figur 5 zu erkennen, gibt es dafür sehr viel Spielraum, eine Schwelle bei 100 oder 400 würde genauso funktionieren. Selbstverständlich können auch andere an sich bekannte Algorithmen zur Erkennung und Lokalisierung eines Peaks eingesetzt werden.

Figur 6 zeigt die X- und Y-Position eines erkannten Blitzes als Funktion der Zeit. Der Zeitpunkt des Blitzes ist aus der zeitlichen Position des Peaks bekannt. Der Blitz lässt sich aber auch örtlich lokalisieren. Die zu dem Peak beitragenden Ereignisse sind jeweils an einer bestimmten Position auf dem Bildsensor 20 aufgetreten. Es liegt somit in den Ereignissen des Peaks eine Liste von X-Y-Positionen der den Blitz erfassenden Pixelelemente vor. Diese können schon direkt als Punktwolke den Blitz lokalisieren, insbesondere in einer Visualisierung beispielsweise zu Diagnosezwecken. Die einzelnen X-Y-Positionen können überdies zu einer Blitzposition zusammengefasst werden, beispielsweise als Schwerpunkt oder Mittelwert. Eine weitere, nicht abschließende Möglichkeit ist eine Umhüllende um die X-Y-Positionen.

In Figur 6 ist nur im Zeitfenster des Peaks der Figur 5 ein Blitz erkannt, daher verläuft die erkannte X- und Y-Position in Figur 6 zu anderen Zeiten auf der Nulllinie. Im Zeitfenster des Peaks sind mit gestrichelter und durchgezogener Linie die resultierenden X- und Y-Positionen gezeigt. Die Figur 6 soll das Vorgehen und den zeitlichen Zusammenhang zu den Figuren 4 und 5 illustrieren. Die Blitzposition könnte intuitiver dargestellt werden, beispielsweise indem auf einer X-Y-Matrix entsprechend den Pixelelementen die Blitzposition hervorgehoben wird. Das sind aber der Blitzerkennung nachgelagerte Schritte zur weiteren Diagnose und Planung der möglichen Reaktion auf einen Blitz.

Die gesamte Blitzerkennung bedarf zu keinem Zeitpunkt der Umrechnung der Ereignisse in ein Bild. Es kann durchgehend auf der Ebene von Ereignissen oder Ereignislisten gearbeitet werden. Die Datenmenge ist gegenüber der Auswertung von Bildern ganz erheblich reduziert. Dadurch ist auch ohne überdimensionierte Rechnerhardware eine echtzeitfähige Blitzerkennung implementierbar.

## Patentansprüche

1. Kamera (10) zur Erkennung von Funkenentladungen (14), die einen ereignisbasierten Bildsensor (20) mit einer Vielzahl von Pixelelementen, die jeweils feststellen, wenn sich die von dem Pixelelement erfasste Intensität ändert, und genau dann ein Ereignis erzeugen, sowie eine Steuer- und Auswertungseinheit (22) aufweist, die dafür ausgebildet ist, Ereignisse aus dem Bildsensor (20) auszulesen und auszuwerten, ob mit den Ereignissen eine Funkenentladung (14) erfasst ist,
**dadurch gekennzeichnet,**
**dass** die Steuer- und Auswertungseinheit (22) dafür ausgebildet ist, nur Ereignisse sich erhöhender Intensität weiter auszuwerten.

2. Kamera (10) nach Anspruch 1,
wobei die Steuer- und Auswertungseinheit (22) dafür ausgebildet ist, eine Funkenentladung (14) als Mindestanzahl von Ereignissen innerhalb einer Maximalzeit zu erkennen, insbesondere einer Mindestanzahl von lokalen Ereignissen.

3. Kamera (10) nach einem der vorhergehenden Ansprüche,
wobei ein jeweiliges Pixelelement feststellt, wenn sich die von dem Pixelelement erfasste Intensität ändert, und genau dann ein Ereignis erzeugt, wobei insbesondere das Ereignis eine differentielle Information aufweist, ob sich die Intensität verringert oder erhöht hat.

4. Kamera (10) nach einem der vorhergehenden Ansprüche,
wobei ein Ereignis jeweils Koordinateninformationen des zugehörigen Pixelelements, eine Zeitinformation und/oder eine Intensitätsinformation aufweist.

5. Kamera (10) nach einem der vorhergehenden Ansprüche,
wobei die Pixelelemente derart ausgebildet oder konfiguriert sind, dass ein Ereignis nur bei hohem Kontrastunterschied entsprechend einer Funkenentladung (14) erzeugt wird.

6. Kamera (10) nach einem der vorhergehenden Ansprüche,
wobei die Steuer- und Auswertungseinheit (22) dafür ausgebildet ist, die Ereignisse selbst auszuwerten, ohne daraus ein Bild zusammenzusetzen, so dass die Auswertung durchgehend auf der Ebene von Ereignissen oder Ereignislisten bleibt.

7. Kamera (10) nach einem der vorhergehenden Ansprüche,
wobei die Steuer- und Auswertungseinheit (22) dafür ausgebildet ist, eine Anzahl während einer Maximalzeit auftretender Ereignisse mit einem Schwellenwert zu vergleichen und bei Überschreiten des Schwellenwerts eine Funkenentladung (14) zu erkennen.

8. Verfahren zur Erkennung von Funkenentladungen (14), wobei mit einem ereignisbasierten Bildsensor (20) mit einer Vielzahl von Pixelelementen, die jeweils feststellen, wenn sich die von dem Pixelelement erfasste Intensität ändert, und genau dann ein Ereignis erzeugen, Ereignisse erzeugt und ausgelesen werden und auswertet wird, ob mit den Ereignissen eine Funkenentladung (14) erfasst ist,
**dadurch gekennzeichnet,**
**dass** nur Ereignisse sich erhöhender Intensität weiter ausgewertet werden.

## Claims

1. A camera (10) for detecting spark discharges (14), comprising an event-based image sensor (20) having a plurality of pixel elements that in each case detect when the intensity detected by the pixel element changes and generate an event then and only then, and a control and evaluation unit (22) configured to read out events from the image sensor (20) and evaluate whether a spark discharge (14) is detected with the events,
**characterized in that** the control and evaluation unit (22) is configured to further evaluate only events of increasing intensity.

2. The camera (10) according to claim 1,
wherein the control and evaluation unit (22) is configured to recognize a spark discharge (14) as a minimum number of events within a maximum time, in particular a minimum number of local events.

3. The camera (10) according to any of the preceding claims,
wherein a respective pixel element detects when the intensity detected by the pixel element changes and generates an event then and only then, wherein in particular the event comprises differential information as to whether the intensity has decreased or increased.

4. The camera (10) according to any of the preceding claims,
wherein an event comprises respective coordinate information of the associated pixel element, a time information and/or an intensity information.

5. The camera (10) according to any of the preceding claims,
wherein the pixel elements are formed or configured such that an event is generated only at a high contrast difference corresponding to a spark discharge (14).

6. The camera (10) according to any of the preceding claims,
wherein the control and evaluation unit (22) is configured to evaluate the events themselves without composing an image therefrom, so that the evaluation remains consistently at the level of events or event lists.

7. The camera (10) according to any of the preceding claims,
wherein the control and evaluation unit (22) is configured to compare a number of events occurring during a maximum time with a threshold value and to detect a spark discharge (14) if the threshold value is exceeded.

8. A method for detecting spark discharges (14), wherein events are generated and read out with an event-based image sensor (20) having a plurality of pixel elements that each detect when the intensity detected by the pixel element changes and then and only then generate an event, and it is evaluated whether a spark discharge (14) is detected with the events,
**characterized in that** only events of increasing intensity are further evaluated.

## Revendications

1. Caméra (10) pour la détection de décharges disruptives (14), comprenant un capteur d'images (20), basé sur des événements, ayant une pluralité d'éléments de pixel qui déterminent chacun le moment où l'intensité détectée par l'élément de pixel change et génèrent alors un événement à ce moment précis, et une unité de commande et d'évaluation (22) conçue pour lire des événements à partir du capteur d'images (20) et pour évaluer si une décharge disruptive (14) est détectée avec les événements,
**caractérisée en ce que**
l'unité de commande et d'évaluation (22) est conçue pour évaluer davantage seuls les événements dont l'intensité augmente.

2. Caméra (10) selon la revendication 1,
dans laquelle l'unité de commande et d'évaluation (22) est conçue pour détecter une décharge disruptive (14) comme un nombre minimal d'événements dans un temps maximal, en particulier un nombre minimal d'événements locaux.

3. Caméra (10) selon l'une des revendications précédentes,
dans laquelle un élément de pixel respectif détermine le moment où l'intensité détectée par l'élément de pixel change et génère alors un événement à ce moment précis, l'événement comprenant en particulier une information différentielle indiquant si l'intensité a diminué ou augmenté.

4. Caméra (10) selon l'une des revendications précédentes,
dans laquelle un événement comprend des informations de coordonnées respectives de l'élément de pixel associé, une information de temps et/ou une information d'intensité.

5. Caméra (10) selon l'une des revendications précédentes,
dans laquelle les éléments de pixel sont conçus ou configurés de telle sorte qu'un événement est généré uniquement en cas de différence de contraste élevée correspondant à une décharge disruptive (14).

6. Caméra (10) selon l'une des revendications précédentes,
dans laquelle l'unité de commande et d'évaluation (22) est conçue pour évaluer les événements eux-mêmes sans en composer une image, de sorte que l'évaluation reste en permanence au niveau des événements ou des listes d'événements.

7. Caméra (10) selon l'une des revendications précédentes,
dans laquelle l'unité de commande et d'évaluation (22) est conçue pour comparer un nombre d'événements survenant pendant une durée maximale avec une valeur seuil et pour détecter une décharge disruptive (14) en cas de dépassement de la valeur seuil vers le haut.

8. Procédé de détection de décharges disruptives (14), dans lequel des événements sont générés au moyen d'un capteur d'images (20), basé sur des événements, ayant une pluralité d'éléments de pixels qui déterminent chacun le moment où l'intensité détectée par l'élément de pixel change et qui génèrent alors un événement à ce moment précis, et lesdits événements sont lus et évaluée si une décharge disruptive (14) est détectée avec les événements,
**caractérisé en ce que**
seuls les événements dont l'intensité augmente sont évalués davantage.
